# EUROPÄISCHE PATENTANMELDUNG

(11) **EP 1 315 167 A2**
(43) Veröffentlichungstag der Anmeldung: **28.05.2003**
(21) Anmeldenummer: 02025805.9
(22) Anmeldetag: 18.11.2002
(51) Int. Cl.: G11B 33/04

(54) **Anordnung zum Ablegen, Aufbewahren und/oder Archivieren von scheibenartigen Daten-bzw. Informationsträgern**

(30) Priorität: 26.11.2001 CH 21752001
(71) Anmelder: Schoop, Christian B., 8044 Gockhausen (CH)
(72) Erfinder: Schoop, Christian B., 8044 Gockhausen (CH); Werly, Jean-Marc, 8008 Zürich (CH)
(74) Vertreter: Troesch Scheidegger Werner AG

(57) **Zusammenfassung**

Eine Anordnung zum Ablegen, Aufbewahren und/oder Archivieren von scheibenartigen Daten- bzw. Informationsträger (11), wie insbesondere CDs, DVDs, MDs, etc. weist mindestens ein mindestens einseitig offenes Behältnis (21) für die Aufnahme und Lagerung von Hüllen (1) auf. Die Hüllen sind dergestalt, dass sie geeignet sind für die Aufnahme mindestens eines der erwähnten Datenträgers, wie beispielsweise einer CD, DVD oder einer Mini-Disc. Schliesslich ist der Boden (25) des einseitig offenen Behältnisses rutschfest bzw. positionsfestlegend ausgebildet, so dass die Hüllen im Behältnis in aufrechter Position bzw. Lage angeordnet werden können.

## Beschreibung

Scheibenartige Daten- und/oder Informationsträger, wie Compact Disks (CD), Digital Versatile Disks (DVD), Mini-Discs, und dergleichen werden in der Regel in transparenten Hartkunststoffbehältnissen eingelegt, transportiert, abgelegt und archiviert. Dabei ist es möglich, diese Behältnisse in Regalen, kistenartigen Behältnissen, Boxen, auf Ausziehschubladen und dergleichen aufzubewahren. Der für die Aufbewahrung benötigte Platz ist enorm, und zudem werden die verwendeten Hartkunststoffhüllen oft zerkratzt, beschädigt oder sie können gar zerbrechen.
Für die Lösung dieser Problematik werden seit einiger Zeit einerseits sehr dünne, wiederum aus einem Hartkunststoff bestehende Hüllen angeboten sowie neuerdings gar flexible Hüllen, welche eine enorme Platzersparnis ermöglichen. Obwohl das Bedürfnis des Platzsparens und auch des besseren Handlings derartiger Aufbewahrungsbehältnisse gross ist, haben sich alle angebotenen Alternativlösungen kaum durchgesetzt, und beispielsweise Musik-CD's sowie auch CD's, enthaltend neue Software-Programme, werden nach wie vor in den seit jeher verwendeten Hartkunststoffbehältnissen angeboten.
Es ist daher eine Aufgabe der vorliegenden Erfindung, eine Lösung für die erwähnte Platzproblematik vorzuschlagen, welche auch ein besseres Handling und Aufbewahren bzw. Archivieren der erwähnten scheibenartigen Daten- und/oder Informationsträgern ermöglicht.

Erfindungsgemäss wird die gestellte Aufgabe mittels einer Anordnung gemäss dem Wortlaut nach Anspruch 1 gelöst.
Es hat sich gezeigt, dass die eingangs geschilderte Problematik nicht ausschliesslich durch das Bereitstellen einer platzsparenden und besser handhabbaren Hülle für die scheibenartigen Datenträger wie CDs, MDs oder DVDs gelöst werden kann. Vielmehr ist es auch wichtig, dass diese Hüllen gut handhabbar abgelegt, gelagert bzw. archiviert werden können. Aus diesem Grunde wird erfindungsgemäss ein mindestens einseitig offenes Behältnis für das Aufnehmen der erwähnten Hüllen vorgeschlagen, dessen Boden rutschfest resp. positionsfestlegend ausgebildet ist. Dieses rutschfeste oder positionsfestlegende Ausbilden ist wichtig, dass in das Behältnis eingelegte Hüllen in einer weitgehendst aufrechten Lage bzw. aufrechten Position verbleiben und nicht auf dem Boden des Behältnisses rutschend auf den Boden abkippen. Durch das rutschfeste Ausbilden des Bodens wird sichergestellt, dass die in das Behältnis eingelegten Hüllen, enthaltend mindestens einen scheibenartigen Datenträger, in aufrechter Lage verbleiben, so dass eine stets sichtbare und gut handhabbare Position der abgelegten Hülle bzw. Hüllen sichergestellt ist. Dies ist vor allem wichtig, wenn mehrere Hüllen, enthaltend die scheibenartigen Datenträger, im Behältnis abgelegt bzw. gelagert oder archiviert werden.

Das rutschfeste Ausbilden des Bodens ist auf verschiedene Art und Weise möglich. So kann der Boden beispielsweise aufgerauht, gerippt und/oder eine hohe Rutschfestigkeit aufweisend ausgebildet sein, wobei letzteres durch entsprechende Materialwahl bei der Herstellung des Behältnisses oder durch zusätzliches Beschichten des Bodens mit einem eine hohe Rutschfestigkeit aufweisenden Material erzielt werden kann.
Es ist aber auch möglich, zusätzlich auf dem Boden des Behältnisses ein Einlageelement, wie eine Einlagematte oder Folie einzulegen, welches Element bzw. welche Matte mindestens einseitig eine rutschfest ausgebildete Oberfläche aufweist. Die Rutschfestigkeit kann einerseits erzielt werden durch Wahl eines entsprechenden flexiblen polymeren Materials, wie insbesondere eines elastomeren und/oder kautschukartigen Materials, wie Gummi und/oder durch das Ausbilden einer aufgerauhten Oberfläche, oder gar durch Ausbilden einer entsprechend gerippt ausgebildeten Oberfläche. Die Rippung kann dabei derart gewählt sein, dass jeweils in eine Vertiefung zwischen zwei Rippen eine abzulegende Hülle eingelegt werden kann.
Die für die Anordnung verwendete Hülle bzw. die Hüllen sind vorzugsweise flexibel und weisen mindestens zwei taschenartig ausgebildete Hälften auf, wobei der Bereich zwischen den Hüllen-Hälften faltbar ausgebildet ist. Durch dieses zwei Hälften aufweisende Ausbilden der Hülle kann in der einen Hälfte der Datenträger, wie eine CD, in eine entsprechende Tasche eingelegt werden und in der anderen Hälfte ein Datenblatt, wie beispielsweise ein CD Cover. Selbstverständlich ist es auch möglich, die beiden Hälften je mehrtaschig auszubilden für das Aufnehmen von zwei oder mehr CDs, MDs oder DVDs und das Anbringen mehrerer Informationsblätter, wie beispielsweise CD Covers. Die Hüllen können aber auch zwei-, drei- oder mehrfach gefaltet sein, umfassend entsprechend mehrere "Hälften". Für das Herstellen der Hülle bzw. der Hüllen eignen sich insbesondere polymere Werkstoffe, wie beispielsweise PVC, Polyethylen, Polyamid, Polypropylen, PVDC, PETP etc., wobei zudem die Hülle vorzugsweise wenigstens nahezu transparent ausgebildet ist. Letzteres ist insofern notwendig, falls ein eingelegtes Informationsblatt durch die Hülle hindurch sichtbar sein muss.
Das Behältnis ist vorzugsweise boxenartig ausgebildet, aufweisend einen Boden und mindestens zwei, vorzugsweise vier Seitenwände, wobei die vier Seitenwände an je ihren Seitenkanten verbunden zusammenhängend ausgebildet sein können, oder aber, falls dies designmässig erwünscht ist, können die Seitenwände in den Kanten der Box je voneinander getrennt unterbrochen ausgebildet sein. Das Behältnis kann aus einem metallenen Werkstoff gefertigt sein, wie Aluminium, Stahlblech etc., oder aber es kann auch aus Karton, Holz oder Leder bzw. Lederersatz gefertigt sein. Geeignet für das Herstellen des Behältnisses sind auch polymere Werkstoffe, wie beispielsweise Polyethylen, Polypropylen, Polyamid, Polykarbonat, Polystyrol, PMMA, ABS etc., wobei selbstverständlich auch Polymere geeignet sind auf Cellulose- oder Stärkebasis. Das Behältnis kann weiss, schwarz, eingefärbt ausgebildet sein oder vorzugsweise farblos oder eingefärbt wenigstens nahezu transparent.
Mindestens eine der Seitenflächen kann beispielsweise als Informationsträger bzw. als Trägerfläche für das Anbringen einer Botschaft verwendet werden. So können beispielsweise im Falle von Musik-CD's verschiedene Boxen verwendet werden, eine für klassische Musik und entsprechend beschriftet mit "Classic", eine für moderne Unterhaltungsmusik, beschriftet mit "Pop" etc. Es ist aber möglich, die erfindungsgemässe Anordnung als Werbegeschenk zu verwenden und entsprechend die Boxen mit Werbebotschaften zu versehen bzw. mit firmenbezogenen oder vereinsbezogenen Logos.
Damit die Behältnisse rutschfest auch auf einer glatten Unterlage angeordnet werden können, wie beispielsweise einem Tablar oder dergleichen, werden vorzugsweise Boden- bzw. Standhilfen, wie sogenannte Füsschen oder Auflagetaps, angeordnet. Diese werden vorzugsweise in den vier Ecken eines rechteckigen bzw. quadratischen Behältnisses am Boden angeordnet.
Gegebenenfalls ist es erwünscht, wenn das Behältnis mit einem Deckel versehen ist, welcher z.B. über ein Scharnier auf und ab schwenkbar mit dem Behältnis verbunden ist.
Schliesslich wird weiter die Verwendung von sogenannten Registereinlageelementen vorgeschlagen, welche vorgesehen sind, um die im Behältnis abgelegten bzw. gelagerten Hüllen zu ordnen. Diese Einlageelemente können beispielsweise ein Alphabetregister aufweisen, oder aber Angaben bezüglich des Inhaltes der jeweils hinter einem Registereinlageelement angeordneten, in Hüllen eingelegten CD's. So kann ein Registereinlageelement die Information "Classic" enthalten, ein weiteres Einlageelement "Jazz", ein weiteres "Computer Software" etc. Diese Registereinlageelemente sind wiederum vorzugsweise aus einem polymeren Material, wie beispielsweise Polyethylen, Polypropylen, PVC, Polyamid oder ABS gefertigt und sind vorzugsweise farblos oder eingefärbt, transparent oder opak ausgebildet. Insbesondere in einem metallenen Behältnis sind diese Registerelemente ggf. auch vorzugsweise aus Metall gefertigt, wie Aluminium oder Metallblech.
Weitere bevorzugte Ausführungsvarianten der erfindungsgemässen Anordnung sind in den abhängigen Ansprüchen charakterisiert.
Die Erfindung wird nun beispielsweise und unter Bezug auf die beigefügten Figuren näher erläutert.

Dabei zeigen:
- Fig. 1: eine Hülle für die Aufnahme eines scheibenartigen Datenträgers in Perspektive;
- Fig. 2: in Perspektive ein Behältnis für die Aufnahme der Hüllen;
- Fig. 3a bis 3c: Einlageelemente, vorgesehen, um auf dem Boden eines Behältnisses angeordnet zu werden, in Perspektive sowie im Längsschnitt;
- Fig. 4: ein Behältnis, gefüllt mit Hüllen und Registereinlageelementen;
- Fig. 5: mehrere Boxen, versehen mit Information an mindestens einer Seitenfläche;
- Fig. 6a und 6b: ein Behältnis mit speziell designmässig ausgestalteter Eckkante, und
- Fig. 7: ein Leder-Etui, geeignet für die Aufnahme von Hüllen mit Datenträger.

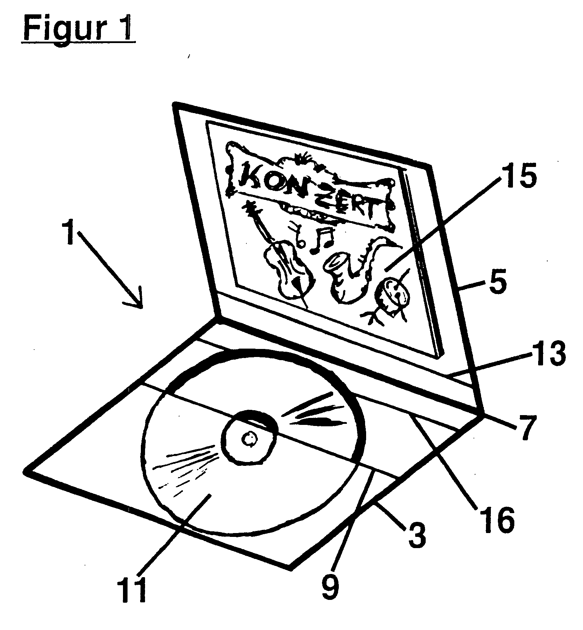

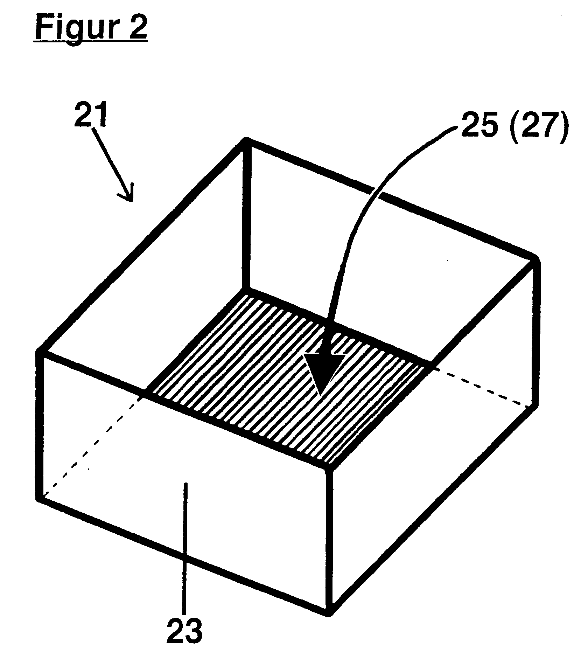

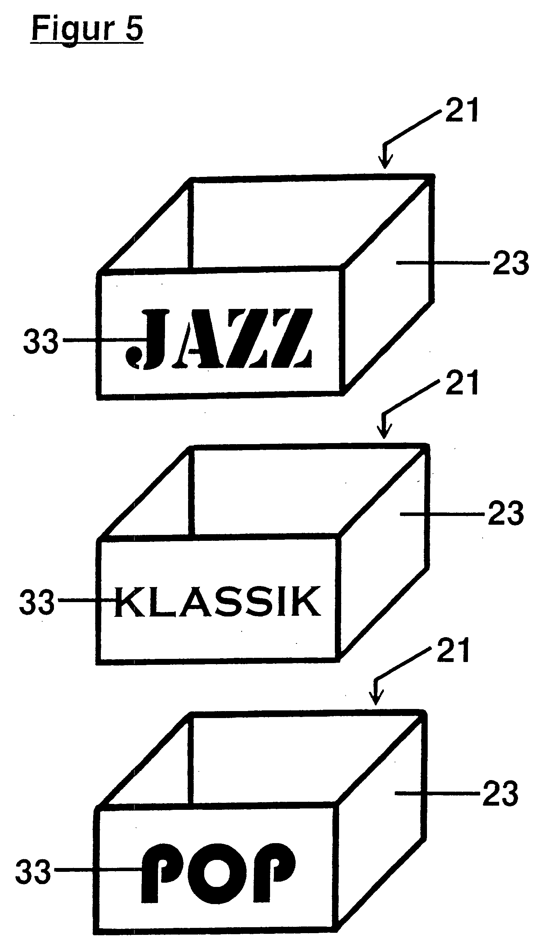

Fig. 1 zeigt in Perspektive und teilweise aufgeklapptem Zustand eine flexible Hülle 1, aufweisend die beiden Hälften 3 und 5. Die beiden Hälften 3 und 5 sind um die mittig ausgebildete Kante 7 klapp- bzw. faltbar. Einerseits ergibt sich diese Beweglichkeit der beiden Hälften durch die Verwendung eines flexiblen Materials für die Herstellung der Hülle, wie beispielsweise eines flexiblen polymeren Materials, wie Polyethylen, Weich-PVC etc., und zudem ist es möglich, im Bereich der Kante 7 beispielsweise eine leichte Perforierung vorzusehen.
In der einen der beiden Hälften ist eine Tasche 9 ausgebildet, in welche eingelegt ein scheibenartiger Datenträger, wie beispielsweise eine CD 11, eingelegt ist. Dabei kann es sich um eine Musik-CD handeln, eine CD, enthaltend Computer-Software etc. Selbstverständlich ist es auch möglich, eine Video-DVD anzuordnen oder einen x-beliebigen anderen scheibenartigen Datenträger, wie beispielsweise eine Mini-Disc. Je nach dem sind andere Hüllengrössen zu verwenden, falls die scheibenartigen Datenträger andere Dimensionen aufweisen.
In der anderen Hälfte ist wiederum eine Tasche 13 angeordnet, in welche eingelegt beispielsweise ein Datenblatt 15 Informationen über den Inhalt der CD liefert. Im Falle einer Musik-CD handelt es sich vorzugsweise um ein CD Cover, wie sie üblicherweise bei den heute gängigen Hartschalen-CD-Hüllen verwendet werden. Eine weitere Tasche 16 in der einen Hälfte 3 ist vorgesehen um beispielsweise ein weiteres Datenblatt, wie ein rückseitiges Cover, von einer Hartschalen-CD-Hülle aufzunehmen.
Für die Lagerung mehrerer der in Fig. 1 dargestellten Hüllen 1 wird nun erfindungsgemäss, und wie in Figur 2 dargestellt, die Verwendung eines Behältnisses 21 vorgeschlagen, bei welchem es sich vorzugsweise um eine rechteckige oder quadratische Box mit Seitenwänden 23 und einem Boden 25 handelt. Erfindungsgemäss vorgeschlagen wird, dass der Boden 25 rutschfest ausgebildet ist, beispielsweise durch Aufrauhen des Bodens oder durch Anbringen einer Rippung, oder vorzugsweise durch Einlegen eines Einlageelementes 27, welches beispielsweise aus einem kautschukartigen Material, wie Gummi, hergestellt sein kann. Wichtig ist, dass in Einlagerichtung gesehen eine Front- und eine Rückwand angeordnet sind, währenddem beispielsweise die Seitenwände am Behältnis 21 weggelassen werden können. Dies ist insbesondere dann vorteilhaft, wenn Hüllen bzw. Datenträger mit unterschiedlichen Dimensionen verwendet werden, welche ggf. sogenannte Überbreiten aufweisen.

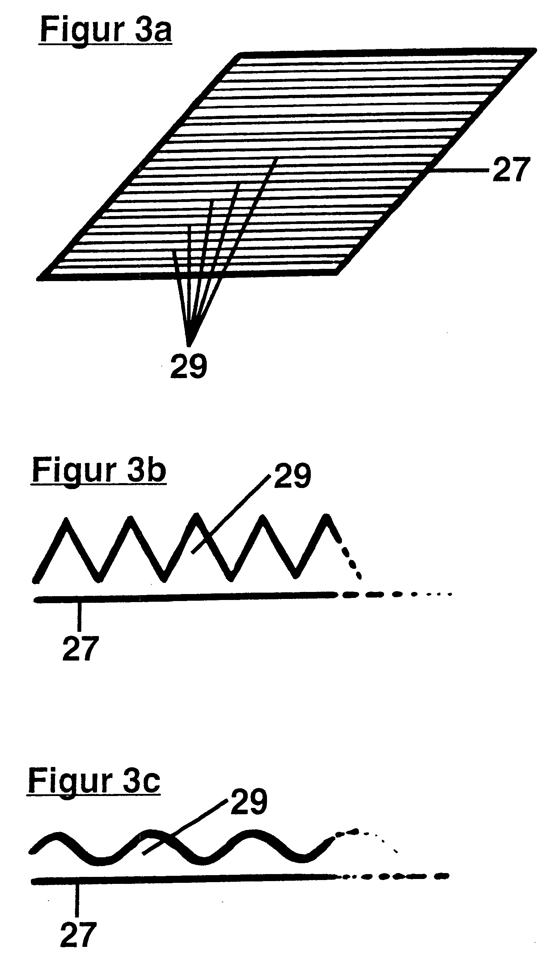

In den Fig. 3a, 3b und 3c sind mögliche Ausführungsvarianten von Einlagematten 27 dargestellt, wobei Fig. 3a eine Matte in perspektivischer Ansicht zeigt und die Figuren 3b und 3c je eine Matte im Längsschnitt. Aus den Figuren 3b und 3c ist deutlich erkennbar, dass die Matte 27 gezackte oder gewellte Querrippen 29 aufweist, welche sicherstellen, dass eine in das Behältnis 21 eingelegte Hülle nicht in Längsrichtung des Behältnisses abrutschen kann. Diese Querrillen 29 können beispielsweise derart dimensioniert sein, dass jeweils immer eine Hülle in einem Rippental positioniert werden kann. Die Ausbildung dieser Rippen ist nicht unbedingt notwendig, da beispielsweise die Verwendung eines kautschukartigen oder elastomeren polymeren Materials bereits ausreichend sein kann, um die Rutschfestigkeit an der Oberfläche der Matte 27 sicherzustellen. Im weiteren ist es auch möglich, anstelle einer flexiblen Matte 27 ein steif ausgebildetes Einlageelement auszubilden, wobei es wichtig ist, dass mindestens die eine Oberfläche, auf welcher die Hüllen aufliegend angeordnet werden, rutschfest ausgebildet ist.

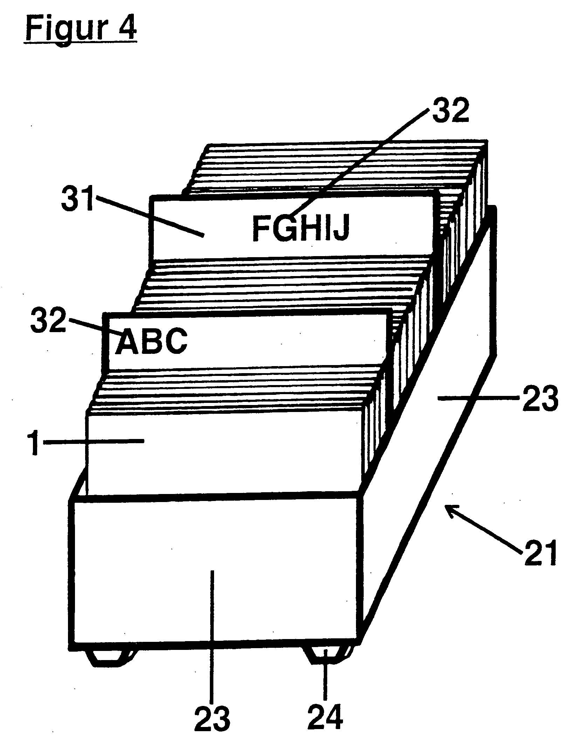

Fig. 4 nun zeigt ein komplettes System, umfassend das Behältnis 21, aufweisend mindestens eine Front- und eine Rückwand 23 mit den im Behältnis angeordneten Hüllen 1, enthaltend beispielsweise Musik-CD's. Zum Ordnen der Hüllen ist es möglich, Registereinlageelemente 31 zu verwenden, welche beispielsweise ein Alphabetregister 32 enthalten. Selbstverständlich ist es auch möglich, diese Registerelemente mit anderen Informationen zu versehen, wie beispielsweise "Classic", "Jazz", "Software" etc. Damit auch bei relativ eng hintereinander angeordneten Registerelementen die Registerinformationen auch weiter hinter angeordneter Registerelemente erkennbar sind, sind diese Einlage-Elemente vorzugsweise wenigsten teilweise transparent oder wenigsten opak ausgebildet. Selbstverständlich kann eine Unterteilung auch durch unterschiedliche Farbgebung der Registerelemente erzielt werden. Ergänzend zu den Registerelementen oder gar als Ersatz ist es natürlich auch möglich, die Hüllen mit unterschiedlichen Farben zu versehen. So können beispielsweise klassische Musik-CD's in grüne Hüllen abgepackt werden, Jazz-CD's in rote, Unterhaltungsmusik-CD's in blaue, etc. Dabei ist es möglich, die Hüllen farbig opak oder farbig transparent auszubilden.
Weiter ist es auch möglich, mindestens eine der Seitenflächen 23 des Behältnisses 21 mit Informationen zu versehen. Um auf das Beispiel in bezug auf Fig. 4 zurückzukommen, können beispielsweise die Behältnisse mit Informationen 33 versehen werden, wie in Fig. 5 dargestellt, um Angaben über die im jeweiligen Behältnis abgelegten Musik-CD's zu visualisieren. Diese Information kann aber auch eine firmen- oder vereinsbezogene Botschaft sein, wie beispielsweise ein Werbeslogan oder lediglich ein Firmen- oder Vereinslogo. Aber auch das Anbringen von heraldischen Wappen, Sternsymbolen, etc. ist möglich. Dies vor allem dann, wenn die erfindungsgemässe Anordnung mindestens umfassend Behältnis und Hüllen beispielsweise als Firmengeschenk oder im Zusammenhang mit speziell abgegebenen Informationsträgern verwendet wird. So ist es beispielsweise möglich, dass eine Computer-Software anbietende Firma zusammen mit der auf CD's abgespeicherten Software ein Behältnis 21 abgibt, wobei mindestens auf einer Seitenwandung eine Firmen- oder Software-bezogenen Botschaft angebracht ist.

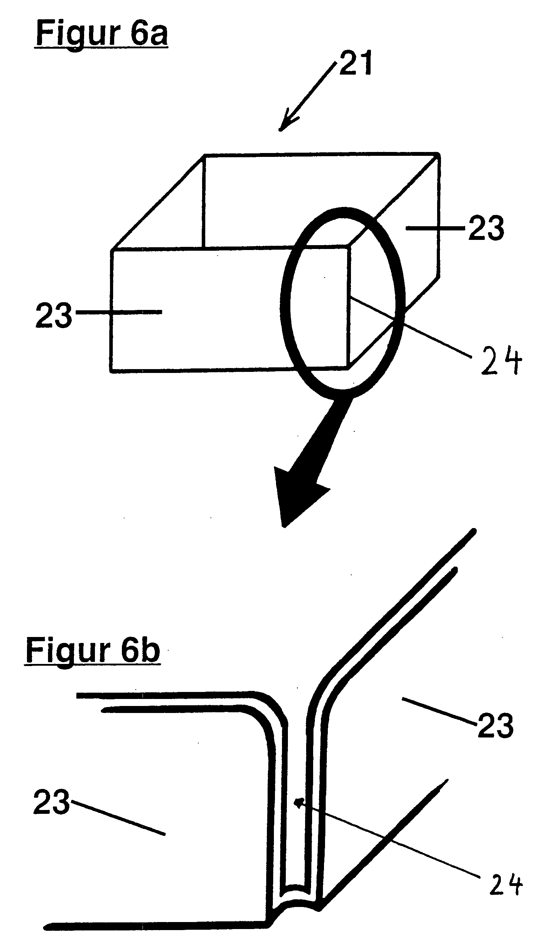

In den Figuren 6a und 6b ist erneut ein Behältnis 21 dargestellt, aufweisend eine designmässig speziell ausgestaltete Eckkante. Dabei zeigt Figur 6a lediglich das Behältnis in Perspektive, währenddem in Figur 6b die designmässige Ausgestaltung einer Eckkante in Vergrösserung dargestellt ist. Aus Figur 6b ist deutlich erkennbar, dass die beiden in die Seitenkante 24 mündenden Seitenflächen 23 nicht aneinander stossen. Dadurch ergibt sich einen Zwischenraum bzw. eine Lücke, wodurch dem Behältnis 21 eine designmässige Komponente verliehen wird, derart, dass das Behältnis wesentlich leichter wirkt. Es verliert dadurch den boxenartigen Charakter und wirkt wesentlich eleganter, was insbesondere beim Plazieren derartiger Behältnisse in Wohnräumen von Bedeutung sein kann.

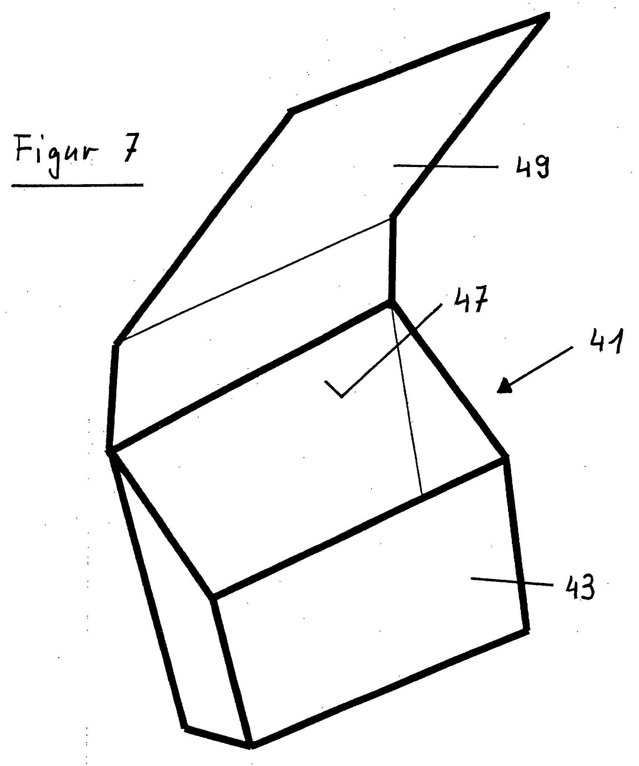

Fig. 7 schliesslich zeigt eine weitere mögliche Ausführungsvariante eines erfindungsgemässen Behältnisses 41, wobei es sich hier um ein Leder-Etui bzw. um eine lederne Box handelt. Dieses Leder-Etui 41 weist dabei eine etwas niedrigere Frontseite 43 auf als die Rückwand 47, um so das Aufbewahren der darin anzuordnenden CD-Hüllen oder auch Mini-Disc-Hüllen übersichtlicher gestalten zu können. Schliesslich ist das Leder-Etui 41 mit einem Deckel 49 versehen, womit die Box verschliessbar ist. Dabei ist es beispielsweise möglich, den Deckel 49 innen an der Frontseite 43 einzustecken, oder aber die Innenseite des Deckels und die äussere Oberfläche der Frontseite 43 mit einem Klettverschluss zu versehen, mit Druckknöpfen, etc. Der Vorteil einer derartigen Box beispielsweise aus Wildleder gefertigt liegt darin, dass durch die Materialwahl der Boden des Behältnisses bereits rutschfest ausgebildet ist. Zudem ist sie verschliessbar und damit transportierbar, da ein Herausfallen der mit CDs gefüllten Hüllen verhindert wird. Je nach dem ob Musik-CDs und Mini-Discs verwendet werden, kann die Lederbox 41 grösser oder kleiner ausgestaltet sein. Falls erwünscht, können die Seitenwände der Lederbox mit entsprechenden Verstärkungen versehen werden, beispielsweise hergestellt aus Karton, einem polymeren Material, Holz, etc. Alternativ zum Leder kann die Box 41 auch aus einem geflochtenen Material hergestellt werden, wie beispielsweise einem verstärkten polymeren Material, wie beispielsweise bestehend aus Polyester oder einer anderen geeigneten Faser. Selbstverständlich ist es auch möglich natürliche Materialien für das Geflecht zu verwenden, wobei notwendigerweise die Seitenwände über eine gewisse Stabilität verfügen müssen, wie beispielsweise bekannt von Korbgeflechten.
Bei den in den Figuren 1 bis 7 dargestellten Hüllen, Behältnissen etc. handelt es sich selbstverständlich nur um Beispiele, welche dazu dienen sollen, die vorliegende Erfindung näher zu erläutern. So richten sich insbesondere die für die Herstellung der Hüllen, der Behältnisse, der Einlagematten, der Auflagefüsschen und der Registereinlageelemente verwendeten Materialien nach den Bedürfnissen und den Anforderungen an die erfindungsgemässe Anordnung. Für die Herstellung hochwertiger Anordnungen werden sicherlich teurere Materialien verwendet, wie beispielsweise im Falle eines Behältnisses Acrylglass oder gar Polykarbonat, wie auch Aluminium, währenddem für die Registereinlageelemente ein opak ausgebildetes Polypropylen verwendet werden kann. Je nach gewähltem polymeren Material ist es auch möglich, die Hüllen derart auszubilden, dass zwei hintereinander angeordnete Hüllen oder zwei aufeinander liegende Hüllen nicht aneinander kleben. Dieser an sich eher unerwünschte Effekt kann sich einstellen beispielsweise bei der Verwendung von Weich-PVC. Bei der Verwendung höherwertiger Polymere, wie beispielsweise Polyamid oder Polypropylen, kann dieser Klebeffekt zumindest stark reduziert werden. Das Behältnis kann designmässig gestaltet werden, wie beispielsweise durch Ausbilden einer spaltartigen Unterbrechung in den Eckkantenbereichen des Behältnisses, d.h. in den Bereichen, wo zwei Seitenflächen aufeinander treffen. Der Fantasie sind keine Grenzen gesetzt.
Eine weitere Möglichkeit besteht auch darin, mindestens Teile der erfindungsgemässen Anordnung aus biologisch abbaubaren Polymeren herzustellen, wie neuerdings entwickelte und angebotene Polymere auf Cellulose- und Stärkebasis, welche feuchtigkeitsunempfindlich sind, jedoch im Falle einer Entsorgung weitgehendst biologisch abbaubar sind.
Auch die Hüllen können mehrteilig ausgebildet und mehrfach gefaltet sein, beispielsweise geeignet für die Aufnahme zweier oder mehrerer Datenträger wie CD's.
Wichtig ist, dass die erfindungsgemässe Anordnung auf der Verwendung von Hüllen für das Aufnehmen der scheibenartigen Datenträger und der Verwendung eines Behältnisses, aufweisend einen rutschfesten Boden, basiert.

## Patentansprüche

1. Anordnung zum Ablegen, Aufbewahren und/oder Archivieren von scheibenartigen Daten- bzw. Informationsträgern (11), wie insbesondere CDs, DVDs, MDs, etc., **gekennzeichnet durch**:
- mindestens eine Hülle (1) für die Aufnahme mindestens eines Trägers (11), und
- mindestens ein, mindestens einseitig offenes Behältnis (21, 41) für die Aufnahme und Lagerung der Hüllen (1), wobei der Boden (25) rutschfest bzw. positionsfestlegend ausgebildet ist.

2. Anordnung nach Anspruch 1, **dadurch gekennzeichnet, dass** der Boden (25) aufgerauht, gerippt und/oder eine hohe Rutschfestigkeit aufweisend ausgebildet ist.

3. Anordnung nach einem der Ansprüche 1 oder 2, **dadurch gekennzeichnet, dass** weiter ein Einlageelement, wie eine Einlagematte oder -folie (27) vorgesehen ist, um auf dem Boden (25) des Behältnisses (21) angeordnet zu werden, welches Element bzw. welche Matte mindestens einseitig eine rutschfest ausgebildete Oberfläche aufweist.

4. Anordnung nach Anspruch 3, **dadurch gekennzeichnet, dass** das Element bzw. die Matte (27) aus einem flexiblen polymeren Material gefertigt ist, wie insbesondere aus einem kautschukartigen oder elastomeren Material, und/oder dass vorzugsweise mindestens eine Oberfläche aufgerauht oder gerippt ausgebildet ist.

5. Anordnung nach einem der Ansprüche 1 bis 4, **dadurch gekennzeichnet, dass** die Hülle (1) flexibel und mindestens zwei taschenartig ausgebildete Hälften (3, 9; 5, 13) aufweisend ausgebildet ist, wobei die Hülle (1) zwischen den Hälften (3, 5) faltbar ausgebildet ist.

6. Anordnung nach einem der Ansprüche 1 bis 5, **dadurch gekennzeichnet, dass** die Hülle (1) mehrteilig faltbar ausgebildet ist, wobei die einzelnen Teile je vorzugsweise mindestens eine Tasche aufweisen für die Aufnahme von zwei oder mehrerer scheibenartiger Daten bzw. Informationsträger (11).

7. Anordnung nach einem der Ansprüche 1 bis 6, **dadurch gekennzeichnet, dass** die Hülle (1) wenigstens nahezu transparent ist und/oder aus einem polymeren Werkstoff, wie insbesondere aus PVC, Polyethylen, Polyamid, Polypropylen, PVDC, PETP etc. gefertigt ist.

8. Anordnung nach einem der Ansprüche 1 bis 7, **dadurch gekennzeichnet, dass** das Behältnis (21, 41) boxenartig, einen Boden (25) und mindestens zwei, vorzugsweise vier Seitenwände (23) umfassend, vorzugsweise rechteckig oder quadratisch ausgebildet ist.

9. Anordnung nach einem der Ansprüche 1 bis 8, **dadurch gekennzeichnet, dass** das Behältnis (21, 41) aus einem metallenen Werkstoff, wie Aluminium, Stahlblech, aus Karton, Holz, Leder oder einem Lederersatz gefertigt ist.

10. Anordnung nach einem der Ansprüche 1 bis 9, **dadurch gekennzeichnet, dass** das Behältnis aus einem polymeren Werkstoff, wie Acrylglass (PMMA), Polystyrol, Polykarbonat, Polyamid, Polyethylen, Polypropylen, ABS, einem Polymer auf Cellulosebasis etc., gefertigt ist und vorzugsweise farblos oder eingefärbt wenigstens nahezu transparent ausgebildet ist.

11. Anordnung nach einem der Ansprüche 1 bis 10, **dadurch gekennzeichnet, dass** das Behältnis zusätzlich einen Deckel aufweist, welcher entweder vom Behältnis trennbar ist, oder beispielsweise um ein Scharnier schwenkbar zum Aufklappen bzw. Verschliessen mit dem Behältnis integral verbunden ist.

12. Anordnung nach einem der Ansprüche 1 bis 11, **dadurch gekennzeichnet, dass** mindestens eine Seitenfläche des Behältnisses als Informationsträger bzw. als Träger einer Botschaft verwendet wird.

13. Anordnung nach einem der Ansprüche 1 bis 12, **dadurch gekennzeichnet, dass** das Behältnis am Boden Standhilfen (24), wie beispielsweise sogenannte Füsschen oder Auflagetaps aufweist, beispielsweise, um ein Rutschen des Behältnisses auf einer Unterlage zu verhindern.

14. Anordnung nach einem der Ansprüche 1 bis 13, **dadurch gekennzeichnet, dass** Registereinlageelemente (31) vorgesehen sind, um die im Behältnis abgelegten Hüllen bzw. Datenträger zu ordnen, wobei die Registereinlageelemente (31) aus einem polymeren Material wie Polyethylen, Polypropylen, PVC, Polyamid, ABS etc., vorzugsweise farblos oder eingefärbt transparent oder opak ausgebildet sind.

15. Verwendung der Anordnung nach einem der Ansprüche 1 bis 14 zum Aufbewahren und/oder Archivieren von Musik-CDs, Mini-Discs, von Daten CDs, DVD-Videos, etc.

16. Verwendung der Anordnung nach einem der Ansprüche 1 bis 14 als Werbeartikel, als Firmengeschenk, als Vereinsartikel und dergleichen.
